# EUROPEAN PATENT SPECIFICATION

(11) **EP 4 345 695 B1**
(45) Date of publication and mention of the grant of the patent: **01.07.2026**
(21) Application number: 23174766.8
(22) Date of filing: 23.05.2023
(51) Int. Cl.: G06N 3/126

(54) **FLOW GENERATION PROGRAM, FLOW GENERATION METHOD, AND INFORMATION PROCESSING DEVICE**
FLUSSERZEUGUNGSPROGRAMM, FLUSSERZEUGUNGSVERFAHREN UND INFORMATIONSVERARBEITUNGSVORRICHTUNG
PROGRAMME DE GÉNÉRATION DE FLUX, PROCÉDÉ DE GÉNÉRATION DE FLUX ET DISPOSITIF DE TRAITEMENT D'INFORMATIONS

(30) Priority: 29.09.2022 JP 2022157119
(43) Date of publication of application: 03.04.2024
(73) Proprietor: FUJITSU LIMITED, Kawasaki-shi, Kanagawa 211-8588 (JP)
(72) Inventor: MARUO, Akito, Kawasaki-shi, Kanagawa, 211-8588 (JP); JIPPO, Hideyuki, Kawasaki-shi, Kanagawa, 211-8588 (JP); SOEDA, Takeshi, Kawasaki-shi, Kanagawa, 211-8588 (JP)
(74) Representative: Hoffmann Eitle

(56) References cited:
- US-B1- 6 327 582
- US-B2- 7 243 086
- ANONYMOUS: "Genetic programming - Wikipedia", 19 August 2022 (2022-08-19), XP093129247, Retrieved from the Internet <URL:https://en.wikipedia.org/w/index.php?title=Genetic_programming&oldid=1105236923> [retrieved on 20240208]

## Description

### FIELD

The embodiments discussed herein are related to a flow generation program, a flow generation method, and an information processing device.

### BACKGROUND

Determination of an optimal processing flow in design of an electronic circuit, creation of control programming of a robot, and the like needs time for trial and error of a processing procedure such as data generation, processing order of data correction and the like, selection of an appropriate model for each processing, parameter setting, and the like, which is difficult work even for an expert.

As an existing technique related to such processing flow determination, there has been known a method of searching for an optimal processing procedure using genetic programming (GP) in which a principle of evolution of organisms (crossover and mutation) is applied to tree structure combinatorial optimization.

Japanese Laid-open Patent Publication No. 2000-132204, Japanese Laid-open Patent Publication No. 2003-109170, and Japanese Laid-open Patent Publication No. 11-85720 are disclosed as related art.

US 7 243 086 B2 describes a provably correct computer program generated using genetic programming techniques. A desired behavior is used to define a formal specification. An initial population of programs is created where each program has a meaning that can be defined using a formalization technique. A fitness function is applied to measure a distance between the meaning of a program, i.e., its actual behavior, and the specification. Any program having a zero value as the measure of distance between the meaning of the program and the specification is determined to be provably correct. After the fitness of some or all of the programs in the current generation of programs has been computed, a provably correct program has not yet been found in the current generation, mutation and/or crossover techniques are performed on at least some of the fittest individuals in the current generation to create the programs of a next generation.

US 6 327 582 B1 describes a computer-implemented method and system for solving a programming problem using genetic programming techniques. A fitness function measures the relative superiority of a first solution with respect to a second solution. The genetic programming system creates multiple program gene strings containing graph reduction operators. Each program gene string represents a potential solution to the programming problem being solved. Input data is applied to each program gene string to generate a solution for each gene string. Each program gene string is evaluated by comparing the solution to the fitness function. The program gene strings are evolved based on the evaluation of their fitness. The gene strings are repeatedly evolved until a termination criteria has been satisfied.

The Wikipedia entry of "Genetic programming" at the time of filing this patent is also considered prior art.

### SUMMARY

### [TECHNICAL PROBLEM]

However, the existing technique described above has a problem that efficiency in searching for an optimal processing flow is poor and it takes time for the search. For example, in the genetic programming (GP), it takes a lot of time to search for the optimal processing procedure by repeating the crossover and mutation when there are a large number of initial combination candidates.

In one aspect, an object is to provide a flow generation program, a flow generation method, and an information processing device capable of efficiently obtaining an optimal processing flow.

### [SOLUTION TO PROBLEM]

According to an aspect of the embodiments, a flow generation program that causes at least one computer to execute a process, the process includes based on first metadata that corresponds to a first problem of processing flow generation, selecting a processing flow that corresponds to a second problem with second metadata with a certain similarity level with respect to the first metadata by referring to a memory that stores a plurality pieces of metadata and a plurality of processing flows that correspond to each of a plurality of problems, the plurality of problems including the first problem and the second problem; and specifying a tree structure of the process flow that corresponds to the first problem based on genetic programming that uses the selected processing flow as an initial individual.

### [ADVANTAGEOUS EFFECTS OF INVENTION]

It becomes possible to efficiently obtain an optimal processing flow.

### BRIEF DESCRIPTION OF DRAWINGS

FIG. 1 is a block diagram illustrating an exemplary hardware configuration of an information processing device according to an embodiment;
FIG. 2 is a block diagram illustrating an exemplary functional configuration of the information processing device according to the embodiment;
FIG. 3 is an explanatory diagram for explaining an outline of a training phase in the information processing device according to the embodiment;
FIG. 4 is an explanatory diagram for explaining an outline of an operation phase in the information processing device according to the embodiment;
FIG. 5 is a flowchart illustrating exemplary operation of the information processing device according to the embodiment;
FIG. 6A is a flowchart illustrating exemplary operation of the information processing device according to the embodiment;
FIG. 6B is a flowchart illustrating exemplary operation of the information processing device according to the embodiment;
FIG. 7 is an explanatory diagram for explaining exemplary virtual data according to a first embodiment;
FIG. 8A is an explanatory diagram for explaining an exemplary flow DB according to the first embodiment;
FIG. 8B is an explanatory diagram for explaining an exemplary flow DB according to the first embodiment;
FIG. 9 is an explanatory diagram for explaining exemplary processing target data according to the first embodiment;
FIG. 10 is an explanatory diagram for explaining an exemplary output result according to the first embodiment;
FIG. 11 is an explanatory diagram for explaining comparison between the first embodiment and an existing example;
FIG. 12 is an explanatory diagram for explaining adjustment of a flow DB according to a second embodiment;
FIG. 13 is an explanatory diagram for explaining an outline of a module according to a third embodiment;
FIG. 14 is an explanatory diagram for explaining an outline of a hypervolume;
FIG. 15 is an explanatory diagram for explaining an exemplary flow DB according to the third embodiment;
FIG. 16 is an explanatory diagram for explaining exemplary processing target data according to the third embodiment;
FIG. 17 is an explanatory diagram for explaining an outline of modeling according to the third embodiment;
FIG. 18 is an explanatory diagram for explaining an exemplary output result according to the third embodiment;
FIG. 19 is an explanatory diagram for explaining comparison of solutions between the third embodiment and an existing example; and
FIG. 20 is an explanatory diagram for explaining comparison between initial individuals and solutions according to the third embodiment and the existing example.

### DESCRIPTION OF EMBODIMENTS

Hereinafter, a flow generation program, a flow generation method, and an information processing device according to embodiments will be described with reference to the drawings. Configurations having the same functions in the embodiments are denoted by the same reference signs, and redundant description will be omitted. Note that the flow generation program, the flow generation method, and the information processing device to be described in the following embodiments are merely examples, and do not limit the embodiments. Furthermore, the following individual embodiments may be appropriately combined unless otherwise contradicted.

### (Embodiments)

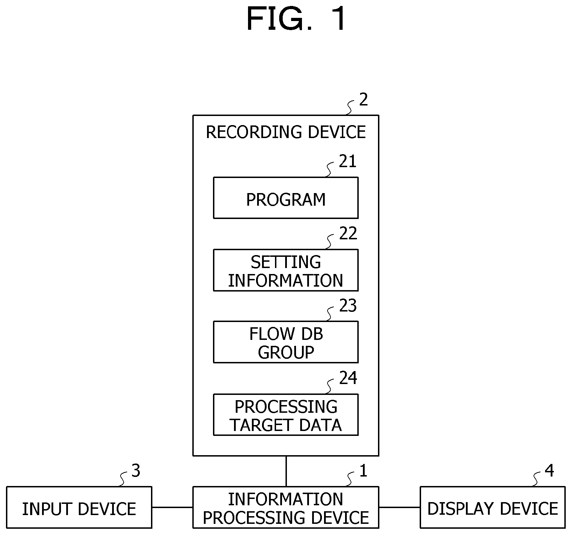

FIG. 1 is a block diagram illustrating an exemplary hardware configuration of an information processing device according to an embodiment. As illustrated in FIG. 1, an information processing device 1 is coupled to a recording device 2, an input device 3, and a display device 4 via a communication line such as a universal serial bus (USB). For example, a personal computer (PC) or the like may be applied as the information processing device 1.

The recording device 2 is, for example, a hard disk drive (HDD) device, a solid state drive (SSD) device, or the like. The recording device 2 stores various types of information to be used by the information processing device 1, such as a program 21, setting information 22, a flow DB group 23, processing target data 24, and the like.

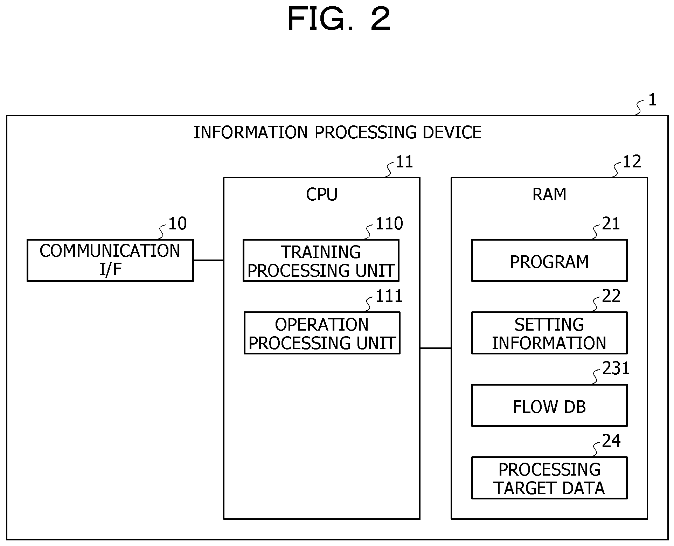

The program 21 is program data that provides various functions of the information processing device 1 by being read and executed by a CPU 11 (see FIG. 2) of the information processing device 1.

The setting information 22 is data describing various setting contents when the CPU 11 of the information processing device 1 executes the program 21.

The flow DB group 23 is accumulation of a plurality of databases (DBs) for storing, for each problem, metadata and a processing flow corresponding to the problem.

The processing target data 24 is data related to a problem (also referred to as application problem) for which a flow is generated, such as design of an electronic circuit, creation of control programming of a robot, and the like.

The input device 3 is a device that receives data input from a user, and for example, a keyboard, a mouse, or the like may be applied. The display device 4 is a display or the like that displays a processing result and the like of the information processing device 1, and for example, a liquid crystal display (LCD) or the like may be applied.

FIG. 2 is a block diagram illustrating an exemplary functional configuration of the information processing device 1 according to the embodiment. As illustrated in FIG. 2, the information processing device 1 includes a communication interface (I/F) 10, the CPU 11, and a RAM 12.

The communication I/F 10 is a communication interface that is coupled to an external device or the like by wire or wirelessly and exchanges data with the external device or the like under the control of the CPU 11. For example, the communication I/F 10 exchanges data with the recording device 2, the input device 3, and the display device 4 coupled via a communication line such as a USB.

The central processing unit (CPU) 11 loads the program 21 read from the recording device 2 via the communication I/F 10 into the RAM 12 and sequentially executes it, thereby centrally controlling the operation of the information processing device 1. Specifically, the CPU 11 has functions as a training processing unit 110 and an operation processing unit 111 by executing the program 21.

The random access memory (RAM) 12 provides a work area when the CPU 11 performs various kinds of processing. Specifically, the RAM 12 stores data such as the program 21, the setting information 22, a flow DB 231, the processing target data 24, and the like read from the recording device 2 via the communication I/F 10 to be readable and writable by the CPU 11.

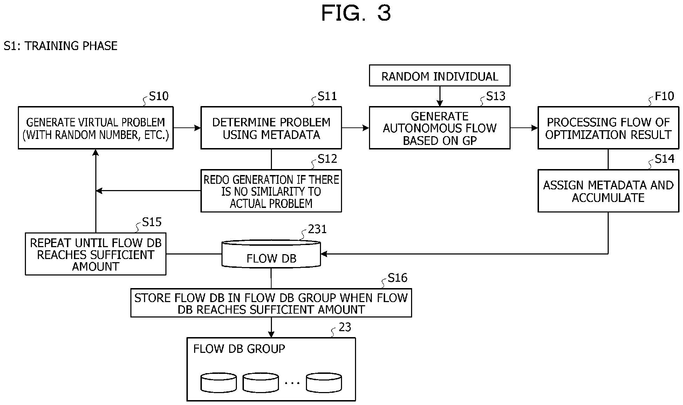

The training processing unit 110 is a processing unit that executes a training phase for generating the flow DB 231 and accumulating it in the flow DB group 23. FIG. 3 is an explanatory diagram for explaining an outline of the training phase in the information processing device according to the embodiment.

As illustrated in FIG. 3, when the training phase (S1) starts, the training processing unit 110 first generates any virtual problem (virtual data) with a random number or the like (S10).

Next, the training processing unit 110 determines whether or not to create an autonomous flow (processing flow) corresponding to the virtual problem using metadata of the generated virtual problem (S11).

Here, the metadata may be any data as long as it indicates the content of the problem. For example, examples of the metadata include the number of explanatory variables included in the problem, the number of pieces of data, a determination coefficient (R2) using a default flow, training data crossover verification, test data, a shape of data density with respect to original data, and the like.

The training processing unit 110 obtains a similarity level between metadata corresponding to an actual problem preset in the setting information 22 and the metadata of the generated virtual problem. Next, if the similarity level is equal to or higher than a predetermined threshold, the training processing unit 110 determines that the autonomous flow corresponding to the virtual problem is to be created.

Note that, if the similarity level is not equal to or higher than the predetermined threshold and there is no similarity between the generated virtual problem and the actual problem, the training processing unit 110 determines that no autonomous flow corresponding to the virtual problem is to be created, and generates a virtual problem again (S12).

If it is determined that an autonomous flow corresponding to the virtual problem is to be created, the training processing unit 110 generates the autonomous flow corresponding to the virtual problem by a search process based on a publicly known processing procedure using the genetic programming (GP) (S13). Specifically, the training processing unit 110 repeats crossover and mutation at a predetermined probability using a random number individual as an initial individual to carry out tree structure combinatorial optimization corresponding to the processing procedure for the generated virtual problem, thereby specifying an optimal tree structure.

Next, the training processing unit 110 assigns the metadata of the virtual problem to a generated processing flow F10 of the optimization result, and accumulates it in the flow DB 231 (S14). In this manner, the training processing unit 110 accumulates, in the flow DB 231, the metadata and the generated processing flow F10 of the optimization result for the generated virtual problem.

Next, the training processing unit 110 repeats the process of S10 to S14 until the flow DB 231 reaches a sufficient amount (number of problems) preset in the setting information 22 or the like (S15). If the flow DB 231 reaches the sufficient amount, the training processing unit 110 stores the flow DB 231 in the flow DB group 23 (S16), and terminates the training phase (S1).

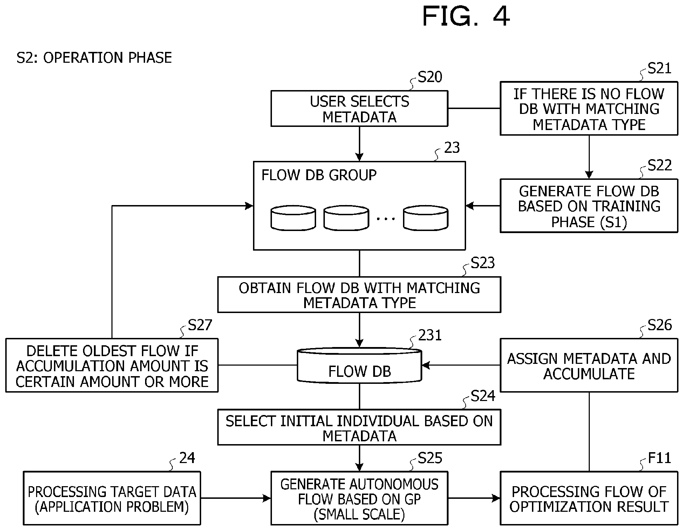

Returning to FIG. 2, the operation processing unit 111 is a processing unit that executes, for an application problem for which a flow is generated, an operation phase for obtaining an optimal processing flow corresponding to the problem. FIG. 4 is an explanatory diagram for explaining an outline of the operation phase in the information processing device according to the embodiment.

As illustrated in FIG. 4, when the operation phase (S2) starts, the user selects metadata through an input operation using the input device 3 or the like (S20). In the selection of the metadata, the user selects in advance a type of the metadata to be used at a time of obtaining an optimal processing flow for the application problem for which a flow is generated.

Upon reception of the selection of the metadata through the input device 3, the operation processing unit 111 searches the flow DB group 23 for the flow DB 231 that matches the selected metadata type. As a result of this search, if there is no flow DB 231 with the matching metadata type in the flow DB group 23 (S21), the training processing unit 110 generates the flow DB 231 based on the training phase (S1) described above (S22).

If there is the flow DB 231 with the matching metadata type as a result of the search described above, the operation processing unit 111 obtains the flow DB 231 with the matching metadata type from the flow DB group 23 (S23).

Next, for the processing target data 24 (application problem), the operation processing unit 111 selects an initial individual (processing flow) at a time of searching for a processing flow based on the genetic programming (GP) from the obtained flow DB 231 based on the metadata of the application problem (S24). Specifically, the operation processing unit 111 obtains a processing flow of a problem with metadata similar to the metadata of the application problem in the obtained flow DB 231, and sets it as the initial individual in the GP.

Next, the operation processing unit 111 performs a processing procedure search process based on the GP using the processing flow of the problem with the metadata similar to the metadata of the application problem as the initial individual, and generates an autonomous flow (processing flow) corresponding to the application problem (S25).

In this S25, the processing procedure search process based on the GP is performed in a relatively small-scaled manner in both the number of individuals and the number of generations as the initial individual is narrowed down in advance to the processing flow of the problem similar to the application problem.

The scale of the GP is preset in the setting information 22 or the like, and is set as, for example, several individuals (number of individuals: 8, etc.), several generations (number of generations: 5), or the like while it is normally set as several hundred individuals and several tens of generations. In this manner, the search time may be shortened by making the scale of the GP smaller. Furthermore, since the initial individual is narrowed down to the processing flow of the problem similar to the application problem, sufficient search accuracy may be maintained even if the scale of the GP is relatively small-scaled.

Next, the operation processing unit 111 assigns the metadata of the application problem to a processing flow F11 of the optimization result generated in S25, and accumulates it in the flow DB 231 (S26). In this manner, the operation processing unit 111 accumulates, in the flow DB 231, the generated processing flow F11 of the optimization result for the application problem together with the metadata of the application problem.

Here, if the accumulation amount (number of problems) of the flow DB 231 is equal to or larger than a certain amount, that is, exceeds a threshold preset in the setting information 22, the operation processing unit 111 deletes the oldest flow (problem metadata and processing flow) (S27). Specifically, the flow DB 231 stores the metadata and the processing flow for each problem in a queue format to which identification information is assigned in the order of being stored. When the number of stored items reaches a certain number, the operation processing unit 111 deletes a problem flow with an earlier storage order and does not match the latest trend.

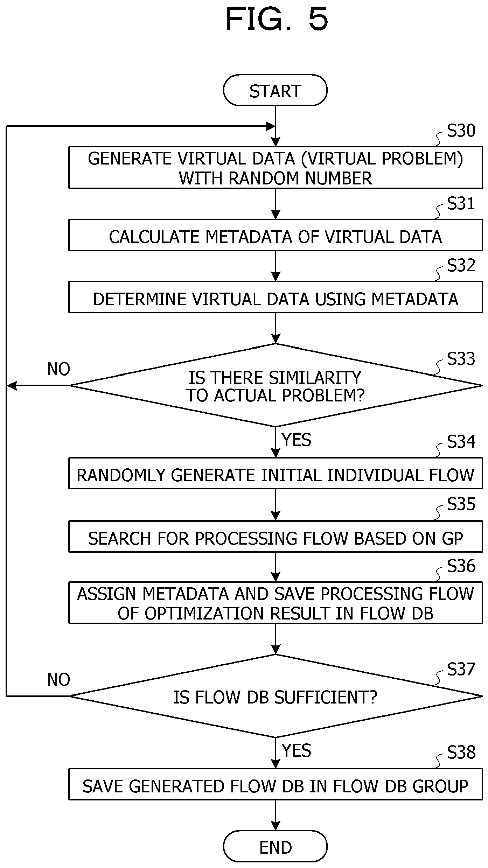

Here, details of the process in the training phase (S1) will be described. FIG. 5 is a flowchart illustrating exemplary operation of the information processing device 1 according to the embodiment, which illustrates exemplary operation of the information processing device 1 in the training phase (S1).

As illustrated in FIG. 5, when the process starts, the training processing unit 110 generates virtual data (virtual problem) with a random number (S30). Next, the training processing unit 110 calculates metadata of the generated virtual data (S31), and makes a determination by comparing the calculated metadata with the metadata corresponding to the actual problem preset in the setting information 22 (S32).

Specifically, the training processing unit 110 determines similarity between the generated virtual problem (virtual data) and the actual problem by comparing the metadata (S33), and if there is similarity (Yes in S33), it is determined that an autonomous flow corresponding to the virtual problem is to be created, and the process proceeds to S34. If there is no similarity (No in S33), it is determined that no autonomous flow corresponding to the virtual problem is to be created, and the training processing unit 110 returns the process to S30.

In S34, the training processing unit 110 randomly creates an initial individual flow (S34), and searches for an autonomous flow corresponding to the virtual problem by a search process based on a publicly known processing procedure using the genetic programming (GP) (S35). As a result, the training processing unit 110 obtains the processing flow F10 of the optimization result.

Next, the training processing unit 110 assigns the metadata of the virtual problem to the processing flow F10 of the optimization result, and stores it in the flow DB 231 (S36).

Next, the training processing unit 110 compares the number of stored items (number of problems) of the flow DB 231 with a threshold preset in the setting information 22 or the like, and determines whether or not the number of stored items of the flow DB 231 is sufficient (S37).

If it is not sufficient (No in S37), the training processing unit 110 returns the process to S30 to continue the training phase. If it is sufficient (Yes in S37), the training processing unit 110 saves the generated flow DB 231 in the flow DB group 23 (S38), and terminates the process of the training phase.

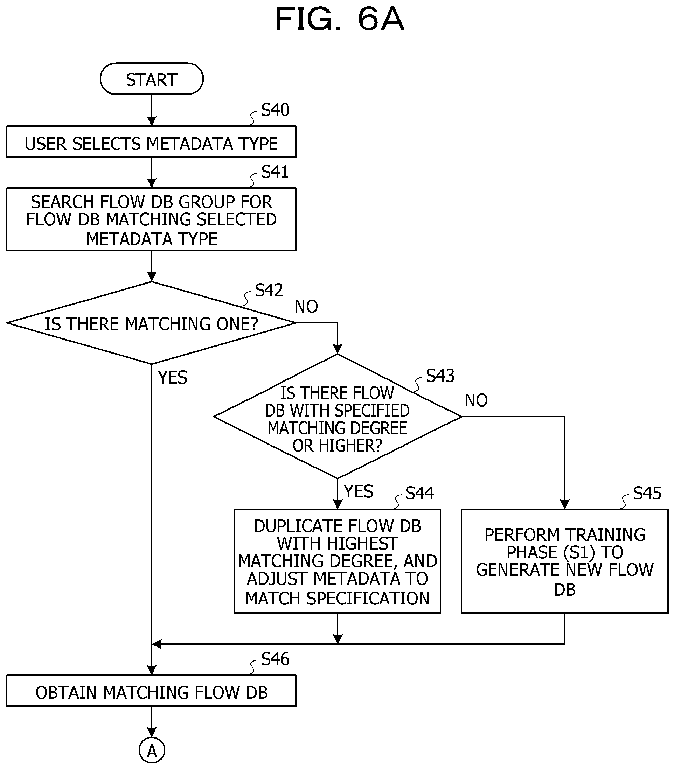

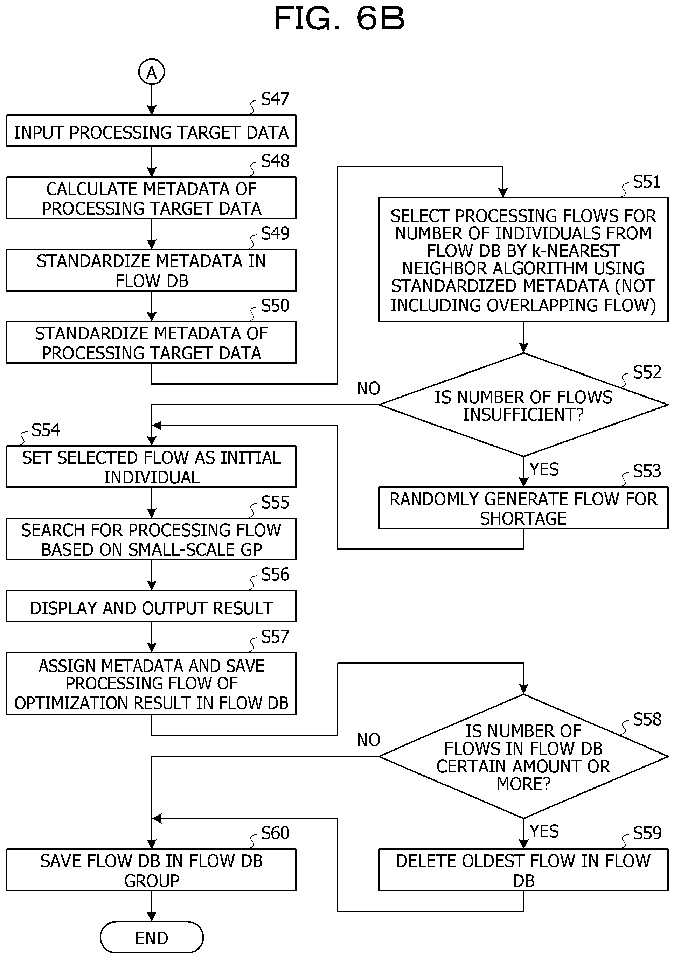

Next, details of the process in the operation phase (S2) will be described. FIGs. 6A and 6B are flowcharts illustrating exemplary operation of the information processing device 1 according to the embodiment, which illustrates exemplary operation of the information processing device 1 in the operation phase (S2).

As illustrated in FIG. 6A, when the process starts, the user selects a metadata type through an operation of the input device 3 or the like (S40). The operation processing unit 111 receives a selection result of the metadata type made by the user via the communication I/F 10.

Next, the operation processing unit 111 searches the flow DB group 23 for a flow DB 231 that matches the metadata type selected by the user (S41). Next, the operation processing unit 111 determines whether or not a matching flow DB 231 exists (S42), and if there is the matching flow DB 231 (Yes in S42), it obtains the matching flow DB 231 from the flow DB group 23 (S46).

If there is no matching flow DB 231 (No in S42), the operation processing unit 111 obtains a matching degree of each of the flow DBs 231 in the flow DB group 23 with respect to the metadata type selected by the user. Next, the operation processing unit 111 determines whether or not there is a flow DB 231 having a matching degree equal to or higher than that specified in the setting information 22 or the like in the flow DB group 23 (S43).

If there is a flow DB 231 having the specified matching degree or higher in the flow DB group 23 (Yes in S43), the operation processing unit 111 duplicates the flow DB 231 having the highest matching degree, and adjusts the metadata of the duplicated flow DB 231 to match the metadata type selected by the user (S44). Specifically, for the duplicated flow DB 231, the operation processing unit 111 supplements metadata of a type insufficient for the metadata type selected by the user.

The adjustment of the metadata in S44 is performed for the purpose of matching the type of the metadata with the user selection, and is not performed for the purpose of matching the content of the metadata. Therefore, the metadata supplemented by the operation processing unit 111 is assumed to be any value or a fixed value. The operation processing unit 111 advances the process to S46 assuming that the flow DB in which the metadata has been supplemented as described above matches the metadata type selected by the user.

If there is no flow DB 231 having the specified matching degree or higher in the flow DB group 23 (No in S43), the training processing unit 110 performs the training phase (S1) to generate a new flow DB 231 (S45), and advances the process to S46.

In this manner, the operation processing unit 111 may obtain the matching flow DB 231 by performing the training phase (S1) or supplementing the metadata of the insufficient type (S46).

As illustrated in FIG. 6B, after S46, the operation processing unit 111 receives an input of the flow DB group 23 by reading from the recording device 2 or the like (S47). Next, the operation processing unit 111 calculates metadata based on the flow DB group 23, that is, the content of the processing target problem (application problem) (S48).

Next, the operation processing unit 111 standardizes (normalizes) the obtained metadata in the flow DB 231, and standardizes (normalizes) the metadata of the flow DB group 23 (S49 and S50). Specifically, the operation processing unit 111 normalizes values of the number of explanatory variables, the number of pieces of data, the determination coefficient (R2) using the default flow, and the like included in the metadata in the flow DB 231 and the metadata of the flow DB group 23 with a value between 0 and 1 to make them mutually comparable.

Next, the operation processing unit 111 selects, from the flow DB 231, processing flows of problems with metadata similar to the metadata of the application problem for the number of individuals as initial individuals by a k-nearest neighbor algorithm using the standardized metadata (S51). Here, it is assumed that the operation processing unit 111 does not include an overlapping flow.

Next, the operation processing unit 111 determines whether or not the number of processing flows of the problems similar to the application problem is sufficient for the number of individuals as initial individuals (S52). If it is not sufficient for the number of individuals as initial individuals (Yes in S52), the operation processing unit 111 randomly generates processing flows for the shortage (S53), and advances the process to S54. If it is sufficient for the number of individuals as initial individuals (No in S52), there is no shortage, and the operation processing unit 111 advances the process to S54 directly.

In S54, the operation processing unit 111 sets the selected processing flows as initial individuals in the GP. Next, the operation processing unit 111 carries out a processing flow search based on the genetic programming (GP) in which the number of individuals, the number of generations, and the like are small-scaled (S55), and obtains the processing flow F11 of the optimization result.

Next, the operation processing unit 111 displays and outputs the obtained processing flow F11 as a result of the optimal processing procedure for the target problem (application problem) from the display device 4 coupled via the communication I/F 10 (S56).

Next, the operation processing unit 111 assigns the metadata of the application problem to the processing flow F11 of the optimization result, and saves it in the flow DB 231 (S57). Next, the operation processing unit 111 determines whether or not the number of processing flows (problem metadata and processing flows) in the flow DB 231 is equal to or more than a certain amount (S58).

If the number of processing flows in the flow DB 231 is equal to or more than the certain amount (Yes in S58), the operation processing unit 111 deletes the oldest flow (problem metadata and processing flow) in the flow DB 231 (S59), and advances the process to S60.

If the number of processing flows in the flow DB 231 is not equal to or more than the certain amount (No in S58), the operation processing unit 111 saves the flow DB 231 in the flow DB group 23 (S60), and terminates the process.

### (First Embodiment)

Here, a specific example in a first embodiment will be described. It is assumed that the first embodiment aims to search for a generation flow of a characteristic prediction model of a mixture and obtains an optimal processing procedure of each process below. Preprocessing; Data control (data generation, data correction, etc.); Model selection (Gaussian process regression, AutoML, etc.); Setting for model generation; and With or without standardization (explanatory variable and characteristic value)

Note that default model information is assumed include standardization of explanatory variables and characteristic values in the AutoML. Furthermore, an objective function (F) at a time of obtaining an optimal processing procedure is set as follows, and one for maximizing (max) F is to be obtained. - F = 0.4 × (training data cross-validation R2) + 0.3 × (test data R2) + 0.3 × (R2 for original data) - a × (number of modules)

Furthermore, an SMOGN algorithm is used for data correction. The following four modules (DC0 to DC3) are prepared according to magnitude of rel_thres (threshold of rarity in data) and rel_coef (coefficient for performing over/under sampling), which are parameters of the SMOGN. - DC0: rel_thres = 0.05, rel_coef = 1.5; DC1: rel_thres = 0.8, rel_coef = 1.5; DC2: rel_thres = 0.05, rel_coef = 0.01; and DC3: rel_thres = 0.8, rel_coef = 0.01

Furthermore, it is assumed that K (number of adjacencies to be considered in interpolation), which is a parameter of the SMOGN, is adjusted by the number of pieces of data (N) as follows, and others are set as defaults. N ≤ 5: number of data -15 < N ≤ 40: 540 < N: 10

Furthermore, it is assumed that five types of metadata the user has selected are the number of explanatory variables, the number of pieces of data, the determination coefficient R2 using the default flow (training data cross-validation), the determination coefficient R2 using the default flow (test data), and the determination coefficient R2 using the default flow (original data).

Furthermore, it is assumed that there is no flow DB 231 stored in the flow DB group 23 in the initial state (start from the training phase (S1)). It is assumed that the similarity determination using the metadata is made by comparing values of the determination coefficients R2 (training data cross-validation, test data, and original data) using the default flow. For example, in this comparison, a positive value is determined to have similarity to the actual problem. On the other hand, a negative value is determined to have no similarity to the actual problem.

In the first embodiment, a virtual problem was generated as follows. - Number of candidate components (explanatory variables) N_{c}: integer of 3 to 20; Number of pieces of random data N_{d}: integer of 10 to 100; and Total of random data components: 100%. - Data pitch width Δd: 10%; and One piece of data includes 2 to rand {min(N_{c}, 100/Δd)} components. - Characteristic value: random real number of 0 to 1.

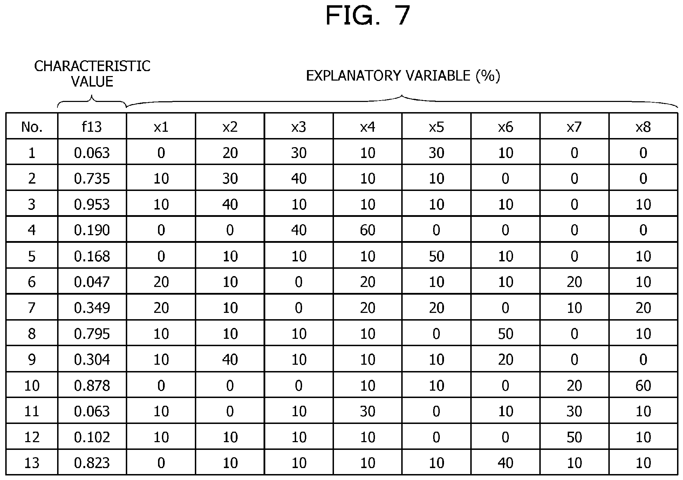

FIG. 7 is an explanatory diagram for explaining exemplary virtual data according to the first embodiment. As illustrated in FIG. 7, in the first embodiment, a virtual problem with random characteristic values and explanatory variables is generated.

Furthermore, execution conditions such as modeling conditions, setting of genetic programming (GP), and the like in the first embodiment are as follows. - A ratio of the modeling condition test data is set to 10%, and the number of cross-validation division is set to 5. - In the GP (normal scale) in the GP setting training phase (S1), the number of individuals is set to 100, and the number of generations is set to 30. Furthermore, in the GP (small scale) in the operation phase (S2), the number of individuals is set to 8, and the number of generations is set to 5.

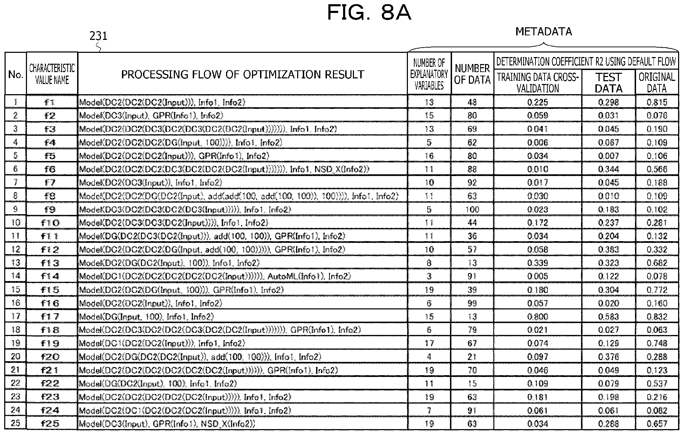

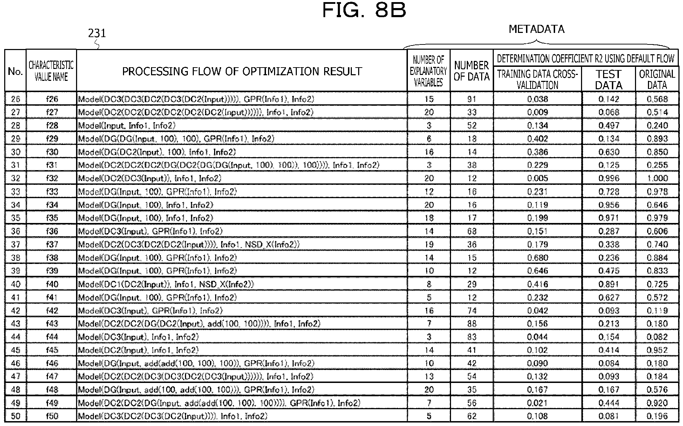

FIGs. 8A and 8B are explanatory diagrams for explaining an example of the flow DB 231 according to the first embodiment, and exemplify the flow DB 231 after the training phase (S1) is carried out under the execution conditions described above.

As illustrated in FIGs. 8A and 8B, when the training phase (S1) is executed, 50 flows (processing flow and metadata for each problem) are generated and stored in the flow DB 231.

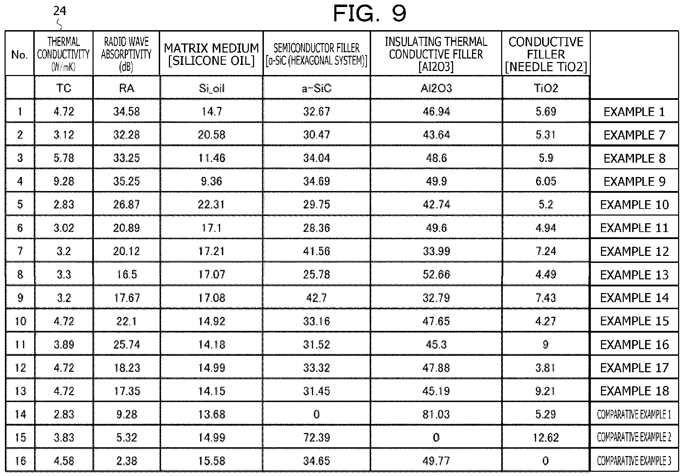

FIG. 9 is an explanatory diagram for explaining exemplary processing target data according to the first embodiment. As illustrated in FIG. 9, it is assumed that data of Japanese Laid-open Patent Publication No. 2021-34637 (Title: Radio Wave Absorption Material, Applicant: TOMOEGAWA CO., LTD.) is used as processing target data 24 according to the first embodiment.

Furthermore, assume that objective variables and explanatory variables are as follows when a generation flow of a characteristic prediction model of a mixture is searched for using the processing target data 24 described above. Objective variables (characteristic values): 2 (thermal conductivity and radio wave absorptivity); and Explanatory variables (material candidates): 4 (medium, semiconductor filler, insulating thermal conductive filler, and conductive filler)

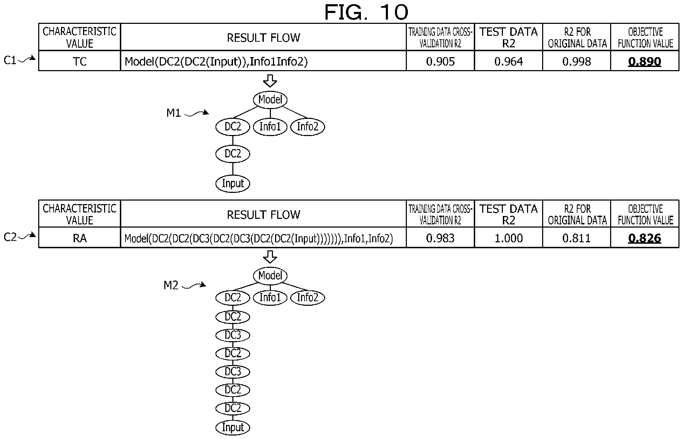

FIG. 10 is an explanatory diagram for explaining an exemplary output result according to the first embodiment. A case C1 in FIG. 10 is a result of obtaining a processing flow related to a TC characteristic value in the operation phase (S2), and a case C2 is a result of obtaining a processing flow related to an RA characteristic value.

While the GP execution conditions in the operation phase (S2) are assumed to be relatively small-scaled such that the number of individuals is 8 and the number of generations is 5 in the first embodiment, objective function values (0.890 and 0.826) are close to 1 in both of the cases C1 and C2 as illustrated in FIG. 10, which indicates that accurate processing flows are obtained. Here, an operation processing unit 111 may generate flow models M1 and M2 obtained by modeling the tree structures of the processing flows of the obtained results, and may display and output them.

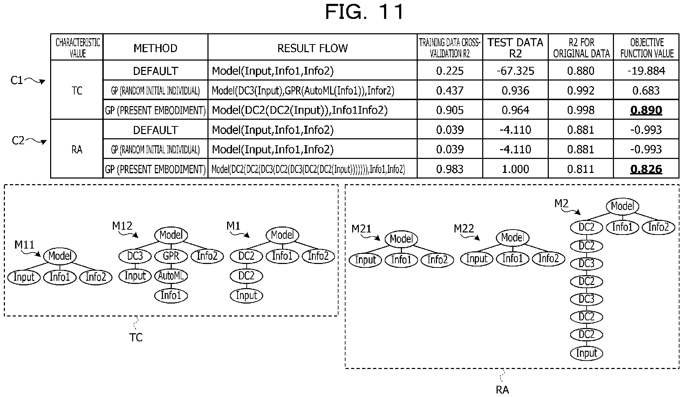

FIG. 11 is an explanatory diagram for explaining comparison between the first embodiment and an existing example, which exemplifies the default and the existing example (GP (random initial individual)) arranged with respect to the result exemplified in FIG. 10. Note that flow models M11 and M12 are obtained by modeling the default and existing example processing flows related to the TC characteristic value in the case C1. Likewise, flow models M21 and M22 are obtained by modeling the default and existing example processing flows related to the RA characteristic value in the case C2.

As illustrated in FIG. 11, in a case where the GP execution conditions in the operation phase (S2) are assumed to be relatively small-scaled such that the number of individuals is 8 and the number of generations is 5, the objective function values in the existing example with random initial individuals are values farther from 1 as compared with the first embodiment. Specifically, in the case of the TC characteristic value in the case C1, the value is 0.890 in the first embodiment, whereas the value is 0.683 in the existing example. Furthermore, in the case of the RA characteristic value in the case C2, the value is 0.826 in the first embodiment, whereas the value is -0.993 in the existing example.

### (Second Embodiment)

In a second embodiment, it is assumed that two flow DBs 231 having the following types of metadata are stored in a flow DB group 23 in advance. - First flow DB: the number of explanatory variables, the number of pieces of data, and a determination coefficient R2 using a default flow (training data cross-validation); and Second flow DB: the number of explanatory variables, the number of pieces of data, a determination coefficient R2 using a default flow (training data cross-validation), and a determination coefficient R2 using a default flow (test data)

Furthermore, it is assumed that five types of metadata the user has selected are the number of explanatory variables, the number of pieces of data, the determination coefficient R2 using the default flow (training data cross-validation), the determination coefficient R2 using the default flow (test data), and the determination coefficient R2 using the default flow (original data). A cutoff (threshold) of a matching degree is set to 0.5.

Matching degrees (S₁ and S₂) with respect to the metadata type selected by the user for the respective first and second flow DBs are calculated as follows. - Matching degree S₁ of the first flow DB = 3/5 = 0.6; and Matching degree S₂ of the second flow DB = 4/5 = 0.8

Since both matching degrees are equal to or higher than 0.5, an operation processing unit 111 adjusts the metadata of the second flow DB having the highest matching degree to match the metadata type selected by the user.

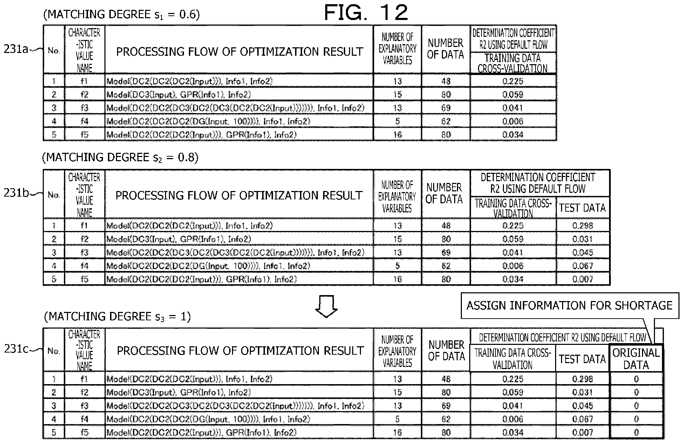

FIG. 12 is an explanatory diagram for explaining adjustment of a flow DB according to the second embodiment. In FIG. 12, a flow DB 231a is a specific example of the first flow DB described above, and a flow DB 231b is a specific example of the second flow DB described above. As illustrated in FIG. 12, the operation processing unit 111 assigns metadata of a type insufficient for the metadata type selected by the user in the flow DB 231b having the highest matching degree, thereby adjusting the metadata. In this manner, in a flow DB 231c after the adjustment of the metadata, a matching degree S₃ becomes 1 (perfect matching). Note that it is sufficient if the adjustment of the metadata is carried out such that the types match without excess or deficiency as in the illustrated example, and a value of the insufficient determination coefficient R2 (original data) may be any value, for example, a constant (0 in this case) or the like may be assigned.

### (Third Embodiment)

In a third embodiment, it is assumed that a multi-objective optimization flow of a mixture is searched for and digital annealer (DA) and a genetic algorithm (GA) are included in selection of an optimization method. Note that the optimization method may include another method (e.g., simulated annealing (SA), linear programming, etc.).

Here, since an available modeling method may be different as follows depending on the optimization method, modeling is performed for each optimization method in the third embodiment. - DA: linear multiple regression and quadratic multiple regression; GA: all available; SA: all available; and Linear programming: linear multiple regression

Furthermore, it is assumed that a single-objective optimization method solves the multi-objective optimization using a linear load. Furthermore, it is assumed that the optimization is carried out using the optimization result of the processing of one preceding step. Here, it is assumed that a random number or a default value is used as an initial value when there is no processing of one preceding step. Furthermore, in a case of DA → GA, the optimization result of DA is used as an initial individual of GA. Furthermore, it is assumed that, at a time of evaluating the multi-objective optimization result of the final result, the best model among the generated models (e.g., objective function value is closest to 1) is used.

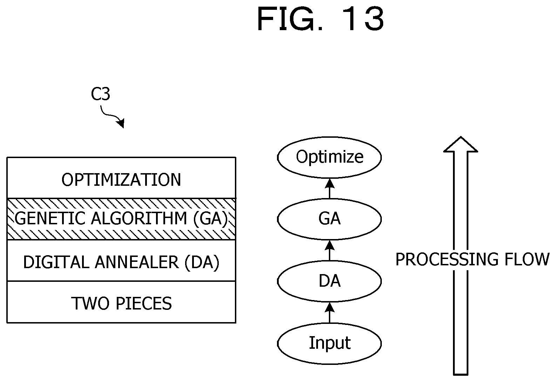

FIG. 13 is an explanatory diagram for explaining an outline of a module according to the third embodiment, which exemplifies a module to be used in a case C3 according to the third embodiment. As illustrated in FIG. 13, it is assumed that optimization of a process using two modules of the genetic algorithm (GA) and the digital annealer (DA) is searched for in the case C3 according to the third embodiment.

Furthermore, an objective function (F) at a time of obtaining an optimal processing procedure in the third embodiment is set as follows, and one for maximizing (max) F is to be obtained. - F = (hypervolume of final result) - a × (number of modules)

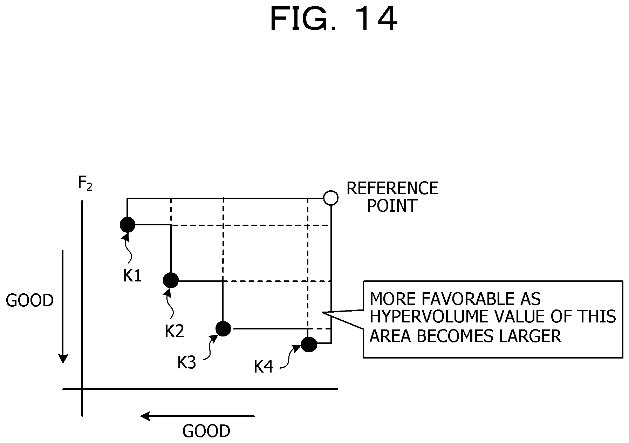

FIG. 14 is an explanatory diagram for explaining an outline of a hypervolume. As illustrated in FIG. 14, a hypervolume represents an area of a region formed by a certain reference point and a set of solutions K1 to K4 obtained by an algorithm in a space of a multi-objective function with a horizontal axis of F₁ and a vertical axis of F₂. In this space, it is indicated that a better result is obtained as the area (hypervolume value) described above is larger.

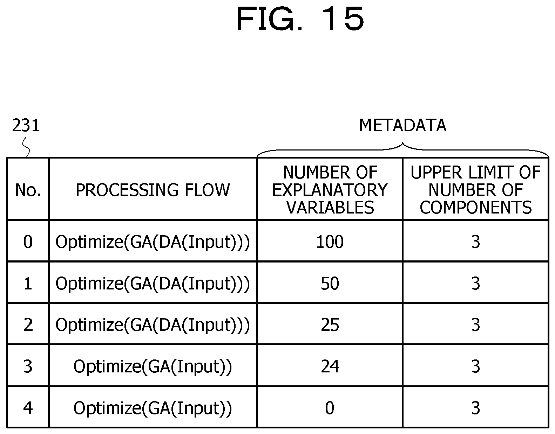

FIG. 15 is an explanatory diagram for explaining an exemplary flow DB 231 according to the third embodiment. In the third embodiment, it is assumed that the flow DB 231 as illustrated in FIG. 15 is prepared in advance.

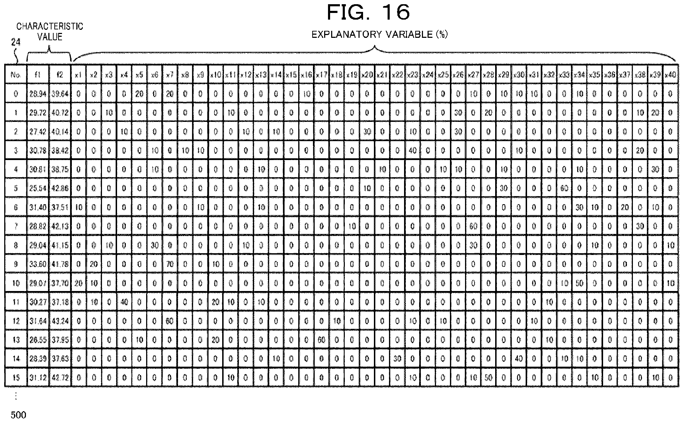

FIG. 16 is an explanatory diagram for explaining exemplary processing target data according to the third embodiment. As illustrated in FIG. 16, it is assumed that processing target data 24 according to the third embodiment is a mixed test problem, and the number of candidate components (explanatory variables) is 40 and the number of pieces of data is 500 for characteristic values f₁ and f₂. Furthermore, it is assumed that one piece of data includes three to eight components, and a data pitch width is 10%.

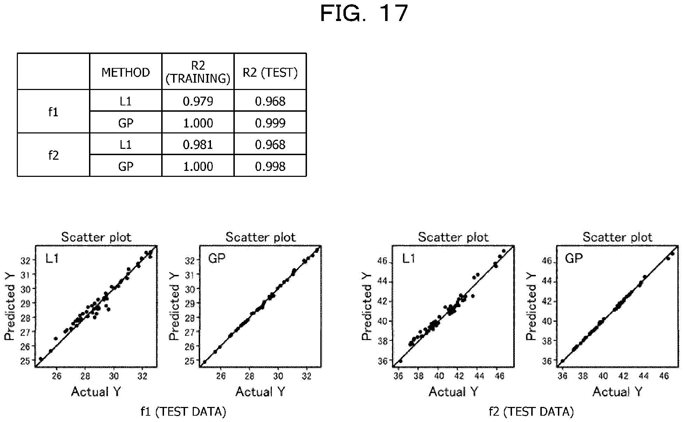

FIG. 17 is an explanatory diagram for explaining an outline of modeling according to the third embodiment. It is assumed that the modeling based on the quadratic multiple regression (L1) and the GP regression according to the third embodiment is carried out as illustrated in FIG. 17. Here, a ratio of the test data is set to 10% (50 pieces). Furthermore, assume that the test data is for the quadratic multiple regression (L1) → DA and for the GP regression → DA.

Furthermore, assume that a minimization problem in the third embodiment is as follows. - F₁(x) = f₁(x) → min, F₂(x) = f₂(x) → min; and E = af₁(x) + (1 - a)f₂(x) → min in the case of DA

Furthermore, assume that setting of the optimization method in the third embodiment is as follows. - GP setting: (number of individuals: 1, and number of generations: 1); Metadata of input data: (number of explanatory variables: 40, and upper limit of number of components: 3); DA setting: a is analyzed 101 times in increments of 0.01 in the range of 0 ≤ a ≤ 1; and GA setting: (number of individuals: 160, number of generations: 250, and upper limit of number of components: 3) Note that, in the case of DA → GA, 101 DA solutions are used as initial individuals of GA, random individuals are used for the rest (e.g., 59) of the initial individuals.

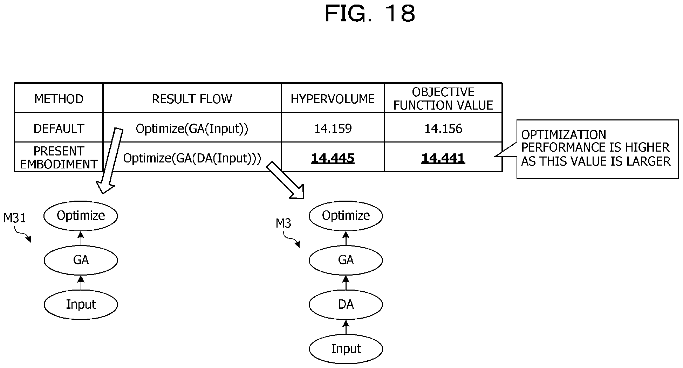

FIG. 18 is an explanatory diagram for explaining an exemplary output result according to the third embodiment. In FIG. 18, a flow model M31 is obtained by modeling a processing flow obtained by a default method (existing example), and a flow model M3 is obtained by modeling a processing flow obtained by the present embodiment (third embodiment).

As illustrated in FIG. 18, in the present embodiment (third embodiment), the flow model M3 using a DA solution as a GA initial solution is obtained. As is clear from the comparison between the objective function value of the flow model M3 and the objective function value of the flow model M31, the present embodiment (third embodiment) has higher (more accurate) performance.

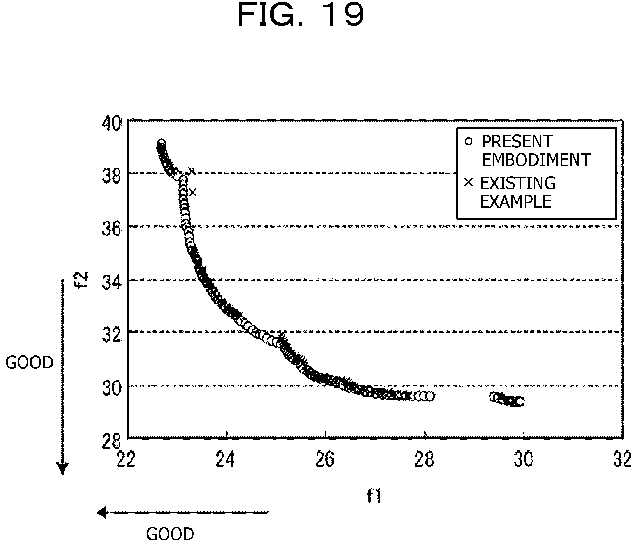

FIG. 19 is an explanatory diagram for explaining comparison of solutions between the third embodiment and the existing example. Circles in FIG. 19 indicate solutions of the present embodiment (third embodiment) in a space with a vertical axis of the characteristic value f₁ and a horizontal axis of the characteristic value f₂. Likewise, cross marks in FIG. 19 indicate solutions of the existing example.

As illustrated in FIG. 19, in the present embodiment (third embodiment), a better Pareto solution having a solution spread in the space and having more solutions on the left side as compared with the existing example.

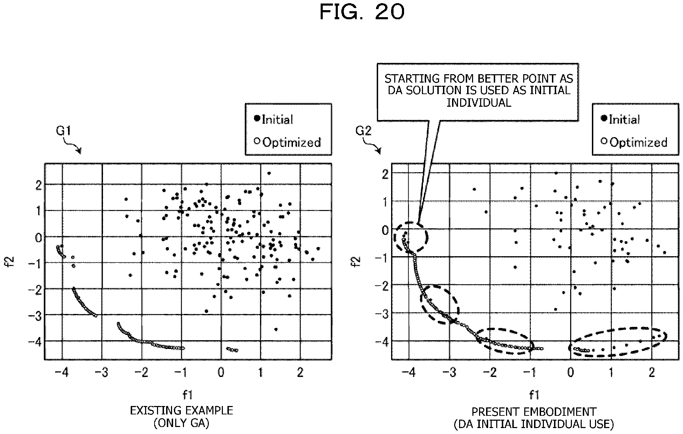

FIG. 20 is an explanatory diagram for explaining comparison between initial individuals and solutions according to the third embodiment and the existing example. In FIG. 20, a graph G1 is a graph of the existing example (only GA), and a graph G2 is a graph of the present embodiment (third embodiment, DA initial individual use). Black circles in the graphs G1 and G2 are plots of initial individuals, and white circles are plots of solutions.

As illustrated in FIG. 20, since the initial individuals are randomly generated in the existing example of the graph G1, they are uniformly dispersed and hardly exist near the solutions. On the other hand, since the DA solutions are used as the initial individuals in the present embodiment (third embodiment, DA initial individual use) of the graph G2, there are many initial individuals near the solutions (sparsely distributed initial individuals are 59 random individuals). Therefore, according to the present embodiment (third embodiment), it becomes possible to start a search from a position close to the solution, and to carry out a more efficient solution search.

As described above, based on metadata corresponding to a target problem of processing flow generation, an information processing device 1 refers to, for each problem, the flow DB 231 that stores metadata and a processing flow corresponding to the problem to select a processing flow corresponding to a problem with metadata similar to the metadata corresponding to the target problem. The information processing device 1 optimizes a tree structure of the process corresponding to the target problem based on genetic programming (GP) using the selected processing flow as an initial individual.

As a result, at the time of optimizing the tree structure of the process corresponding to the target problem based on the genetic programming (GP), the information processing device 1 uses a processing flow of a problem with metadata similar to that of the target problem as an initial individual, whereby an optimal processing flow may be efficiently generated without using a large number of initial individuals randomly.

Furthermore, the information processing device 1 determines, based on the metadata corresponding to an arbitrarily created virtual problem, whether or not to create a processing flow corresponding to the problem. In a case where it is determined that a processing flow is to be created, the information processing device 1 obtains the processing flow corresponding to the created virtual problem based on the genetic programming. The information processing device 1 accumulates the obtained processing flow in the flow DB 231 together with the metadata corresponding to the created virtual problem. In this manner, the information processing device 1 is enabled to cope with various target problems by accumulating processing flows generated from virtual problems in the flow DB 231.

Furthermore, the information processing device 1 assigns the metadata corresponding to the target problem to the processing flow of the tree structure obtained by optimizing the process corresponding to the target problem, and stores it in the flow DB 231. As a result, the information processing device 1 is enabled to adapt the contents (processing flows to be used as initial individuals) accumulated in the flow DB 231 according to the trend (environment) of the target problem.

Furthermore, prior to the selection of the processing flow corresponding to the problem with the metadata similar to the metadata corresponding to the target problem, the information processing device 1 receives selection of a metadata type, and narrows down the flow DBs 231 matching the selected metadata type among the flow DBs 231 stored in a flow DB group 23. As a result, the information processing device 1 is enabled to narrow down the flow DBs 231 according to the metadata type, that is, narrow down the initial individuals to be used at the time of optimizing the target problem based on the genetic programming (GP).

Furthermore, the information processing device 1 supplements metadata of a type insufficient for the selected metadata type for the flow DB 231 having a matching degree with respect to the selected metadata type among the flow DBs 231 stored in the flow DB group 23 equal to or higher than a predetermined value, and then sets it as a matching flow DB 231. As a result, the information processing device 1 is enabled to set the flow DB 231 with the matching degree equal to or higher than the predetermined value to match the selected metadata type by supplementing metadata of the type insufficient for the selected metadata type.

## Claims

1. A flow generation program (21) that causes at least one computer to execute a process, the process comprising:
based on first metadata that corresponds to a first problem of processing flow generation, selecting a processing flow that corresponds to a second problem with second metadata with a certain similarity level with respect to the first metadata by referring to a memory that stores a plurality pieces of metadata and a plurality of processing flows that correspond to each of a plurality of problems, the plurality of problems including the first problem and the second problem; and
specifying a tree structure of the process flow that corresponds to the first problem based on genetic programming that uses the selected processing flow as an initial individual,
wherein the process further comprising:
receiving, prior to the selecting the processing flow, selection of a metadata type; and
narrowing down the processing flow that matches the selected metadata type from the plurality of processing flows stored in the memory, and
wherein the narrowing down includes selecting a processing flow, as the processing flow that matches, obtained by assigning metadata of a type which is not included in the selected metadata type to a processing flow with a matching degree with respect to the selected metadata type equal to or higher than a certain value among the plurality of processing flows stored in the memory,
wherein the process further includes assigning the first metadata to the process flow of the tree structure and storing the process flow of the tree structure assigned the first metadata in the memory, and generating a flow model (M1, M2) by modeling the tree structure of the process flow and outputting the flow model (M1, M2).

2. The flow generation program (21) according to claim 1, wherein the process further comprising:
determining, based on third metadata that corresponds to a third problem, whether presence of a processing flow that corresponds to the third problem;
when the presence of the processing flow that corresponds to the third problem is determined, obtaining the processing flow that corresponds to the third problem based on the genetic programming; and
accumulating the obtained processing flow and the third metadata in the memory.

3. A flow generation method for a computer to execute a process comprising:
based on first metadata that corresponds to a first problem of processing flow generation, selecting a processing flow that corresponds to a second problem with second metadata with a certain similarity level with respect to the first metadata by referring to a memory that stores a plurality pieces of metadata and a plurality of processing flows that correspond to each of a plurality of problems, the plurality of problems including the first problem and the second problem; and
specifying a tree structure of the process flow that corresponds to the first problem based on genetic programming that uses the selected processing flow as an initial individual,
wherein the process further comprising:
receiving, prior to the selecting the processing flow, selection of a metadata type; and
narrowing down the processing flow that matches the selected metadata type from the plurality of processing flows stored in the memory, and
wherein the narrowing down includes selecting a processing flow, as the processing flow that matches, obtained by assigning metadata of a type which is not included in the selected metadata type to a processing flow with a matching degree with respect to the selected metadata type equal to or higher than a certain value among the plurality of processing flows stored in the memory,
wherein the process further includes assigning the first metadata to the process flow of the tree structure and storing the process flow of the tree structure assigned the first metadata in the memory, and generating a flow model (M1, M2) by modeling the tree structure of the process flow and outputting the flow model (M1, M2).

4. The flow generation method according to claim 3, wherein the process further comprising:
determining, based on third metadata that corresponds to a third problem, whether presence of a processing flow that corresponds to the third problem;
when the presence of the processing flow that corresponds to the third problem is determined, obtaining the processing flow that corresponds to the third problem based on the genetic programming; and
accumulating the obtained processing flow and the third metadata in the memory.

5. An information processing device (1) comprising:
a control unit configured to:
based on first metadata that corresponds to a first problem of processing flow generation, select a processing flow that corresponds to a second problem with second metadata with a certain similarity level with respect to the first metadata by referring to a memory that stores a plurality pieces of metadata and a plurality of processing flows that correspond to each of a plurality of problems, the plurality of problems including the first problem and the second problem, and
specify a tree structure of the process flow that corresponds to the first problem based on genetic programming that uses the selected processing flow as an initial individual,
wherein the control unit is further configured to:
receive, prior to the selecting the processing flow, selection of a metadata type, and
narrow down the processing flow that matches the selected metadata type from the plurality of processing flows stored in the memory,
wherein the control unit is further configured to
select a processing flow, as the processing flow that matches, obtained by assigning metadata of a type which is not included in the selected metadata type to a processing flow with a matching degree with respect to the selected metadata type equal to or higher than a certain value among the plurality of processing flows stored in the memory,
wherein the control unit assigns the first metadata to the process flow of the tree structure and stores the process flow of the tree structure assigned the first metadata in the memory, and generates a flow model (M1, M2) by modeling the tree structure of the process flow and outputs the flow model (M1, M2).

6. The information processing device (1) according to claim 5, wherein the control unit is further configured to:
determine, based on third metadata that corresponds to a third problem, whether presence of a processing flow that corresponds to the third problem,
when the presence of the processing flow that corresponds to the third problem is determined, obtain the processing flow that corresponds to the third problem based on the genetic programming, and
accumulate the obtained processing flow and the third metadata in the memory.

## Patentansprüche

1. Flusserzeugungsprogramm (21), das zumindest einen Computer dazu veranlasst, einen Prozess auszuführen, wobei der Prozess umfasst:
auf der Grundlage erster Metadaten, die einem ersten Problem der Verarbeitungsflusserzeugung entsprechen, Auswählen eines Verarbeitungsflusses, der einem zweiten Problem mit zweiten Metadaten mit einem bestimmten Ähnlichkeitsgrad in Bezug auf die ersten Metadaten entspricht, unter Bezugnahme auf einen Speicher, der eine Vielzahl von einzelnen Metadaten und eine Vielzahl von Verarbeitungsflüssen speichert, die jedem aus einer Vielzahl von Problemen entsprechen, wobei die Vielzahl von Problemen das erste Problem und das zweite Problem einschließt; und
Spezifizieren einer Baumstruktur des Prozessflusses, die dem ersten Problem entspricht, auf der Grundlage einer genetischen Programmierung, die den ausgewählten Verarbeitungsfluss als Ausgangsindividuum verwendet,
wobei der Prozess weiter umfasst:
Empfangen einer Auswahl eines Metadatentyps vor dem Auswählen des Verarbeitungsflusses; und
Eingrenzen des Verarbeitungsflusses, der mit dem ausgewählten Metadatentyp aus der Vielzahl von im Speicher gespeicherten Verarbeitungsflüssen übereinstimmt, und
wobei das Eingrenzen das Auswählen eines Verarbeitungsflusses als den übereinstimmenden Verarbeitungsfluss einschließt, der durch Zuweisen von Metadaten eines Typs, der nicht in dem ausgewählten Metadatentyp eingeschlossen ist, zu einem Verarbeitungsfluss mit einem Übereinstimmungsgrad in Bezug auf den ausgewählten Metadatentyp, der gleich oder höher als ein bestimmter Wert ist, aus der Vielzahl der im Speicher gespeicherten Verarbeitungsflüsse erhalten wird,
wobei der Prozess weiter Zuweisen der ersten Metadaten an den Prozessfluss der Baumstruktur und Speichern des Prozessflusses der Baumstruktur, der den ersten Metadaten zugeordnet ist, in dem Speicher, und Generieren eines Flussmodells (M1, M2) durch Modellieren der Baumstruktur des Prozessflusses und Ausgeben des Flussmodells (M1, M2) einschließt.

2. Flusserzeugungsprogramm (21) nach Anspruch 1, wobei der Prozess weiter umfasst:
Bestimmen, ob ein Verarbeitungsfluss vorhanden ist, der dem dritten Problem entspricht, auf der Grundlage dritter Metadaten, die einem dritten Problem entsprechen;
wenn das Vorhandensein des Verarbeitungsflusses, der dem dritten Problem entspricht, bestimmt wird, Erhalten des Verarbeitungsflusses, der dem dritten Problem entspricht, auf der Grundlage der genetischen Programmierung; und
Akkumulieren des erhaltenen Verarbeitungsflusses und der dritten Metadaten im Speicher.

3. Flusserzeugungsverfahren für einen Computer, um einen Prozess auszuführen, der Folgendes umfasst:
auf der Grundlage erster Metadaten, die einem ersten Problem der Verarbeitungsflusserzeugung entsprechen, Auswählen eines Verarbeitungsflusses, der einem zweiten Problem mit zweiten Metadaten mit einem bestimmten Ähnlichkeitsgrad in Bezug auf die ersten Metadaten entspricht, unter Bezugnahme auf einen Speicher, der eine Vielzahl von einzelnen Metadaten und eine Vielzahl von Verarbeitungsflüssen speichert, die jedem aus einer Vielzahl von Problemen entsprechen, wobei die Vielzahl von Problemen das erste Problem und das zweite Problem einschließt; und
Spezifizieren einer Baumstruktur des Prozessflusses, die dem ersten Problem entspricht, auf der Grundlage einer genetischen Programmierung, die den ausgewählten Verarbeitungsfluss als Ausgangsindividuum verwendet,
wobei der Prozess weiter umfasst:
Empfangen einer Auswahl eines Metadatentyps vor dem Auswählen des Verarbeitungsflusses; und
Eingrenzen des Verarbeitungsflusses, der mit dem ausgewählten Metadatentyp aus der Vielzahl von im Speicher gespeicherten Verarbeitungsflüssen übereinstimmt, und
wobei das Eingrenzen das Auswählen eines Verarbeitungsflusses als den übereinstimmenden Verarbeitungsfluss einschließt, der durch Zuweisen von Metadaten eines Typs, der nicht in dem ausgewählten Metadatentyp eingeschlossen ist, zu einem Verarbeitungsfluss mit einem Übereinstimmungsgrad in Bezug auf den ausgewählten Metadatentyp, der gleich oder höher als ein bestimmter Wert ist, aus der Vielzahl der im Speicher gespeicherten Verarbeitungsflüsse erhalten wird,
wobei der Prozess weiter Zuweisen der ersten Metadaten an den Prozessfluss der Baumstruktur und Speichern des Prozessflusses der Baumstruktur, der den ersten Metadaten zugeordnet ist, in dem Speicher, und Generieren eines Flussmodells (M1, M2) durch Modellieren der Baumstruktur des Prozessflusses und Ausgeben des Flussmodells (M1, M2) einschließt.

4. Flusserzeugungsverfahren nach Anspruch 3, wobei der Prozess weiter umfasst:
Bestimmen, ob ein Verarbeitungsfluss vorhanden ist, der dem dritten Problem entspricht, auf der Grundlage dritter Metadaten, die einem dritten Problem entsprechen;
wenn das Vorhandensein des Verarbeitungsflusses, der dem dritten Problem entspricht, bestimmt wird, Erhalten des Verarbeitungsflusses, der dem dritten Problem entspricht, auf der Grundlage der genetischen Programmierung; und
Akkumulieren des erhaltenen Verarbeitungsflusses und der dritten Metadaten im Speicher.

5. Informationsverarbeitungsvorrichtung (1), umfassend:
eine Steuereinheit, die dazu konfiguriert ist:
auf der Grundlage erster Metadaten, die einem ersten Problem der Verarbeitungsflusserzeugung entsprechen, einen Verarbeitungsfluss, der einem zweiten Problem mit zweiten Metadaten mit einem bestimmten Ähnlichkeitsgrad in Bezug auf die ersten Metadaten entspricht, unter Bezugnahme auf einen Speicher, der eine Vielzahl von einzelnen Metadaten und eine Vielzahl von Verarbeitungsflüssen speichert, die jedem aus einer Vielzahl von Problemen entsprechen, auszuwählen, wobei die Vielzahl von Problemen das erste Problem und das zweite Problem einschließt, und
eine Baumstruktur des Prozessflusses, der dem ersten Problem entspricht, auf der Grundlage einer genetischen Programmierung zu spezifizieren, die den ausgewählten Verarbeitungsfluss als Ausgangsindividuum verwendet,
wobei die Steuereinheit weiter dazu konfiguriert ist:
vor dem Auswählen des Verarbeitungsflusses eine Auswahl eines Metadatentyps zu empfangen, und
den Verarbeitungsfluss, der mit dem ausgewählten Metadatentyp aus der Vielzahl von im Speicher gespeicherten Verarbeitungsflüssen übereinstimmt, einzugrenzen,
wobei die Steuereinheit weiter dazu konfiguriert ist
einen Verarbeitungsfluss als den übereinstimmenden Verarbeitungsfluss auszuwählen, der durch Zuweisen von Metadaten eines Typs, der nicht in dem ausgewählten Metadatentyp eingeschlossen ist, zu einem Verarbeitungsfluss mit einem Übereinstimmungsgrad in Bezug auf den ausgewählten Metadatentyp, der gleich oder höher als ein bestimmter Wert ist, aus der Vielzahl der im Speicher gespeicherten Verarbeitungsflüsse erhalten wird,
wobei die Steuereinheit die ersten Metadaten dem Prozessfluss der Baumstruktur zuweist und den Prozessfluss der Baumstruktur, der den ersten Metadaten zugeordnet ist, in dem Speicher speichert, und ein Flussmodell (M1, M2) durch Modellieren der Baumstruktur des Prozessflusses und Ausgeben des Flussmodells (M1, M2) generiert.

6. Informationsverarbeitungsvorrichtung (1) nach Anspruch 5, wobei die Steuereinheit weiter dazu konfiguriert ist:
auf der Grundlage dritter Metadaten, die einem dritten Problem entsprechen, zu bestimmen, ob ein Verarbeitungsfluss vorhanden ist, der dem dritten Problem entspricht,
wenn das Vorhandensein des Verarbeitungsflusses, der dem dritten Problem entspricht, bestimmt wird, auf der Grundlage der genetischen Programmierung den Verarbeitungsfluss, der dem dritten Problem entspricht, zu erhalten, und
den erhaltenen Verarbeitungsfluss und die dritten Metadaten im Speicher zu akkumulieren.

## Revendications

1. Programme (21) de génération de flux qui amène au moins un ordinateur à exécuter un processus, le processus comprenant :
sur la base de premières métadonnées qui correspondent à un premier problème de génération de flux de traitement, la sélection d'un flux de traitement qui correspond à un deuxième problème avec de deuxièmes métadonnées avec un certain niveau de similarité par rapport aux premières métadonnées en se référant à une mémoire qui stocke une pluralité d'éléments de métadonnées et une pluralité de flux de traitement qui correspondent à chacun d'une pluralité de problèmes, la pluralité de problèmes incluant le premier problème et le deuxième problème ; et
la spécification d'une structure arborescente du flux de processus qui correspond au premier problème sur la base d'une programmation génétique qui utilise le flux de traitement sélectionné comme individu initial,
dans lequel le processus comprend en outre :
la réception, avant la sélection du flux de traitement, de la sélection d'un type de métadonnées ; et
la restriction du flux de traitement à celui qui correspond au type de métadonnées sélectionné à partir de la pluralité de flux de traitement stockés dans la mémoire, et
dans lequel la restriction inclut la sélection d'un flux de traitement, en tant que flux de traitement correspondant, obtenu en attribuant des métadonnées d'un type qui n'est pas inclus dans le type de métadonnées sélectionné à un flux de traitement avec un degré de correspondance par rapport au type de métadonnées sélectionné égal ou supérieur à une certaine valeur parmi la pluralité de flux de traitement stockés dans la mémoire,
dans lequel le processus inclut en outre l'attribution des premières métadonnées au flux de processus de la structure arborescente et le stockage du flux de processus de la structure arborescente attribuée aux premières métadonnées dans la mémoire, et la génération d'un modèle de flux (M1, M2) par modélisation de la structure arborescente du flux de processus et délivrance en sortie du modèle de flux (M1, M2).

2. Programme (21) de génération de flux selon la revendication 1, dans lequel le processus comprend en outre :
la détermination, sur la base de troisièmes métadonnées qui correspondent à un troisième problème, de la présence ou non d'un flux de traitement qui correspond au troisième problème ;
lorsque la présence du flux de traitement qui correspond au troisième problème est déterminée, l'obtention du flux de traitement qui correspond au troisième problème sur la base de la programmation génétique ; et
l'accumulation du flux de traitement obtenu et des troisièmes métadonnées dans la mémoire.

3. Procédé de génération de flux pour qu'un ordinateur exécute un processus comprenant :
sur la base de premières métadonnées qui correspondent à un premier problème de génération de flux de traitement, la sélection d'un flux de traitement qui correspond à un deuxième problème avec de deuxièmes métadonnées avec un certain niveau de similarité par rapport aux premières métadonnées en se référant à une mémoire qui stocke une pluralité d'éléments de métadonnées et une pluralité de flux de traitement qui correspondent à chacun d'une pluralité de problèmes, la pluralité de problèmes incluant le premier problème et le deuxième problème ; et
la spécification d'une structure arborescente du flux de processus qui correspond au premier problème sur la base d'une programmation génétique qui utilise le flux de traitement sélectionné comme individu initial,
dans lequel le processus comprend en outre :
la réception, avant la sélection du flux de traitement, de la sélection d'un type de métadonnées ; et
la restriction du flux de traitement à celui qui correspond au type de métadonnées sélectionné à partir de la pluralité de flux de traitement stockés dans la mémoire, et
dans lequel la restriction inclut la sélection d'un flux de traitement, en tant que flux de traitement correspondant, obtenu en attribuant des métadonnées d'un type qui n'est pas inclus dans le type de métadonnées sélectionné à un flux de traitement avec un degré de correspondance par rapport au type de métadonnées sélectionné égal ou supérieur à une certaine valeur parmi la pluralité de flux de traitement stockés dans la mémoire,
dans lequel le processus inclut en outre l'attribution des premières métadonnées au flux de processus de la structure arborescente et le stockage du flux de processus de la structure arborescente attribuée aux premières métadonnées dans la mémoire, et la génération d'un modèle de flux (M1, M2) par modélisation de la structure arborescente du flux de processus et délivrance en sortie du modèle de flux (M1, M2).

4. Procédé de génération de flux selon la revendication 3, dans lequel le processus comprend en outre :
la détermination, sur la base de troisièmes métadonnées qui correspondent à un troisième problème, de la présence ou non d'un flux de traitement qui correspond au troisième problème ;
lorsque la présence du flux de traitement qui correspond au troisième problème est déterminée, l'obtention du flux de traitement qui correspond au troisième problème sur la base de la programmation génétique ; et
l'accumulation du flux de traitement obtenu et des troisièmes métadonnées dans la mémoire.

5. Dispositif (1) de traitement d'informations comprenant :
une unité de commande configurée pour :
sur la base de premières métadonnées qui correspondent à un premier problème de génération de flux de traitement, sélectionner un flux de traitement qui correspond à un deuxième problème avec de deuxièmes métadonnées avec un certain niveau de similarité par rapport aux premières métadonnées en se référant à une mémoire qui stocke une pluralité d'éléments de métadonnées et une pluralité de flux de traitement qui correspondent à chacun d'une pluralité de problèmes, la pluralité de problèmes incluant le premier problème et le deuxième problème, et
spécifier une structure arborescente du flux de processus qui correspond au premier problème basé sur une programmation génétique qui utilise le flux de traitement sélectionné comme individu initial,
dans lequel l'unité de commande est configurée en outre pour :
recevoir, avant de sélectionner le flux de traitement, la sélection d'un type de métadonnées, et
réduire le flux de traitement qui correspond au type de métadonnées sélectionné parmi la pluralité de flux de traitement stockés dans la mémoire,
dans lequel l'unité de commande est configurée en outre pour
sélectionner un flux de traitement, en tant que flux de traitement correspondant, obtenu en attribuant des métadonnées d'un type qui n'est pas inclus dans le type de métadonnées sélectionné à un flux de traitement avec un degré de correspondance par rapport au type de métadonnées sélectionné égal ou supérieur à une certaine valeur parmi la pluralité de flux de traitement stockés dans la mémoire,
dans lequel l'unité de commande attribue les premières métadonnées au flux de processus de la structure arborescente et stocke le flux de processus de la structure arborescente attribuée aux premières métadonnées dans la mémoire, et génère un modèle de flux (M1, M2) en modélisant la structure arborescente du flux de processus et en délivrant en sortie le modèle de flux (M1, M2).

6. Dispositif (1) de traitement d'informations selon la revendication 5, dans lequel l'unité de commande est configurée en outre pour :
déterminer, sur la base de troisièmes métadonnées correspondant à un troisième problème, la présence ou non d'un flux de traitement correspondant au troisième problème,
lorsque la présence du flux de traitement correspondant au troisième problème est déterminée, obtenir le flux de traitement correspondant au troisième problème sur la base de la programmation génétique, et
accumuler le flux de traitement obtenu et les troisièmes métadonnées dans la mémoire.
